(19) Europäisches Patentamt
European Patent Office
Office européen des brevets

(11) Numéro de publication : **0 434 484 B1**

(12) # FASCICULE DE BREVET EUROPEEN

(45) Date de publication du fascicule du brevet : **24.03.93 Bulletin 93/12**

(51) Int. Cl.[5] : **C02F 1/52,** C02F 5/02, B01J 8/44, B01J 8/00

(21) Numéro de dépôt : **90403334.7**

(22) Date de dépôt : **26.11.90**

(54) **Dispositif pour l'adoucissement de l'eau par décarbonatation.**

(30) Priorité : **22.12.89 FR 8917054**

(43) Date de publication de la demande : **26.06.91 Bulletin 91/26**

(45) Mention de la délivrance du brevet : **24.03.93 Bulletin 93/12**

(84) Etats contractants désignés : **CH DE DK ES GB IT LI**

(56) Documents cités :
**EP-A- 0 140 444**
**EP-A- 0 162 783**
**EP-A- 0 222 953**
**DE-A- 2 365 248**
**FR-A- 2 179 046**
**US-A- 3 654 143**

(73) Titulaire : **OTV (OMNIUM de TRAITEMENTS et de VALORISATION)**
**Le Doublon 11 avenue Dubonnet**
**F-92407 Courbevoie (FR)**

(72) Inventeur : **Bablon, Guy**
**19 Le Pré des Coulons**
**F-78810 Feucherolles (FR)**
Inventeur : **Faivre, Michel**
**2 Place Anne Franck**
**F-78260 Acheres (FR)**

(74) Mandataire : **Cuer, André et al**
**Cabinet Ballot-Schmit 7, rue Le Sueur**
**F-75116 Paris (FR)**

**EP 0 434 484 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a trait au domaine de l'adoucissement des eaux par décarbonatation, notamment dans le cas des eaux potables. Elle concerne plus spécialement une technologie particulière de réacteur qui, incorporé dans une chaine de traitement d'eaux ou utilisé seul, permet d'assurer, par un volume relativement faible, une décarbonatation totale ou partielle de l'eau.

On sait que l'adoucissement de l'eau et la décarbonatation qui en résulte, par élimination du carbonate de calcium ($CaCO_3$) et de la magnésie (Mg $(OH)_2$), sont généralement assurés soit par échange d'ions avec une résine sodique soit par ajout à l'eau à traiter d'un réactif basique provoquant une précipitation des carbonates et de la magnésie qu'il faut ensuite filtrer. Les réactions mises en jeu, soit avec l'hydroxyde de sodium soit avec la chaux hydratée, peuvent s'écrire:

$$Ca\ (HCO3)_2 + 2NaOH \rightarrow \underline{Ca\ CO3}\downarrow + Na2\ CO3 + 2H2O$$

$$Ca\ (HCO3)_2 + Ca(OH)_2 \rightarrow 2\ \underline{Ca\ CO3}\downarrow + 2\ H_2O$$

Le but est évidemment de faire chuter la dureté de l'eau c'est-à-dire de son titre Hydrométrique (TH) souvent très élevé et pouvant atteindre 50 degrés ou plus, de façon à ramener ce TH a des valeurs avantageusement comprises entre 8 et 15° comme le recommande, par exemple, le Conseil Supérieur d'Hygiène Publique de France (CS HPF).

Le procédé le plus recommandé actuellement, semble-t-il, pour assurer industriellement la décarbonatation, par exemple des eaux potables, consiste à incorporer dans la station de traitement un réacteur où l'eau brute, injectée à la base, est traitée par un agent alcalin du type précité au sein d'un matériau granuleux fin servant de germe de cristallisation pour la formation de billes de carbonate de calcium, et maintenu en fluidisation dans la masse liquide.

Un tel procédé, communément appelé "décarbonatation catalytique", présente des avantages évidents par rapport à la simple précipitation de carbonates par ajout de réactifs chimiques puis décantation et notamment: une vitesse de réaction plus rapide; une précipitation à un pH inférieur; une élimination du carbonate sous forme de billes dures faciles à manipuler et éventuellement utilisables dans d'autres buts; l'emploi d'une vitesse hydraulique plus importante qu'avec des décanteurs, vu la décantation très aisée desdites billes; la possibilité d'éliminer en outre certains composants de l'eau brute qui s'incorporent souvent dans les cristaux de CaCO3, comme par exemple le fer, le manganèse et de petites quantités de matières organiques.

L'exploitation, encore rare, de ce processus dans un réacteur de décarbonatation catalytique se heurte cependant à un certain nombre de difficultés ou inconvénients. En effet, les réacteurs connus ou proposés jusqu'à ce jour sont conçus pour travailler sur de grandes hauteurs,d'au moins 5 mètres et plus généralement de 8 à 9 mètres ou parfois plus encore. Par ailleurs les vitesses de transit doivent généralement être limitées à 20-40 m/h pour obtenir un taux de décarbonatation acceptable. De plus, l'exploitation du dispositif est malaisée vu le fréquent dépôt de carbonate de calcium en zone basse du réacteur et/ou le début de prise en masse du matériau sur les parois. Enfin, l'extraction des billes de matériau support enrobé de carbonate ainsi que le choix du moment d'extraction et l'usure rapide par abrasion des organes mécaniques dans le circuit d'extractions, rendent l'exploitation du procédé difficile et coûteuse.

Le but essentiel de l'invention est de proposer un procédé et, plus particulièrement, un réacteur de décarbonatation catalytique, selon le principe rappelé ci-dessus, qui permette de supprimer ou d'atténuer considérablement les inconvénients précités et, tout spécialement, dont la hauteur peut être réduite à seulement 2 à 4 mètres environ, avec d'excellentes performances.

Conformément à la caractéristique essentielle de l'invention, le réacteur est muni d'une part, dans sa partie inférieure, d'une série d'injecteurs plats constitués par deux grilles perforées comportant chacune une face de dents triangulaires et disposées tête-bêche, par lesquelles l'eau est injectée et, d'autre part, dans sa partie supérieure, d'un prolongement comprenant une série de lamelles inclinées faisant un angle de 55 à 65 degrés avec l'axe vertical du réacteur.

L'utilisation de ces injecteurs plats pour le passage de l'eau brute à traiter permet d'envisager de très grandes vitesses d'entrée du liquide dans le réacteur, par exemple entre 1000 et 4000 m/h (soit 0,3 à 1,10 m/s). Ces éléments empêchent les dépôts des carbonates: encastrés dans la paroi plancher servant de crépine, ils ne présentent aucun épaulement ou arête vive en relief susceptibles d'être abrasés par les tourbillons d'eau et de matériau en suspension. En pratique, l'écartement moyen entre les perforations des deux grilles est avantageusement compris entre 0,1 et 0,6 mm et le nombre d'injecteurs plats, qui est variable selon la vitesse de transfert souhaitée, se situe le plus souvent entre 30 et 60 par m2 de section du fond du réacteur.

Par ailleurs, l'adoption d'un réacteur dont le prolongement est muni de lamelles inclinées, présente une série d'avantages. En effet, ces lamelles permettent d'abaisser fortement la vitesse de Hazen et favorisent, même avec de grandes vitesses de passage de l'eau, la densification des billes dans la partie verticale du réacteur en améliorant ainsi le contact eau-billes. L'expansion du lit de matériau granulaire est donc limitée pour une vitesse donnée et le brassage des billes est favorisé. Du même coup on maitrise mieux les variations d'expansion du lit fluidisé, liées à la viscosité de l'eau, laquelle dépend de la température. Et, bien entendu, la présence de cette partie en lamelles inclinées permet d'abaisser la hauteur totale du réacteur à 4, voire 3mètres, par exemple, au lieu des 8 à 9 mètres ou plus de la technique connue. En pratique, les lamelles peuvent avoir un espacement entre elles de 5 à 50 centimètres environ et elles sont disposées avantageusement sur toute la section du réacteur, selon un angle de 55 à 65 degrés.

L'invention sera mieux comprise par la description détaillée d'un mode de réalisation, non limitatif, illustré sur les dessins de la planche annexée, qui représentent :

. Figure 1 : une vue générale schématique, en coupe, d'un type de réacteur conforme à l'invention

. Figure 2 : une vue, en projection sur le plan horizontal, d'un plancher à crépine muni de ses séries d'injecteurs plats pour l'eau à traiter

. Figure 3 : une vue détaillée, en coupe, d'un système à injecteurs plats selon l'invention.

Tel qu'illustré sur la figure 1, le réacteur circulaire de décarbonatation 1 a une hauteur d'environ trois mètres dont 1,50 m pour la partie verticale 1a et sensiblement la même longueur pour la partie coudée 1b. Il est réalisé par tronçons reliés entre eux par des plaques à joints 2a, 2b, 2c, 2d. Il est en outre avantageusement muni de hublots de surveillance 3a, 3b, 3c, 3d ainsi que de divers systèmes de vannes à différents niveaux 4a, 4b, 4c, 4d, et 4e pour prélèvement, contrôle et analyse des flux.

La partie inférieure du réacteur est remplie d'un matériau inerte 5, granuleux, à fines particules de diamètre moyen généralement compris entre 0,1 et 0,6 mm. Ce matériau est généralement constitué par du sable mais on peut mettre en oeuvre d'autres produits équivalents tels que de la poudre de calcaire, de la brique pilée ou autres. Grâce à la présente des lamelles inclinées à la partie supérieure du réacteur, on peut aussi utiliser des matériaux plus légers que le sable tels que: schiste, pierre ponce, anthracite, chamotte.

Conformément à une caractéristique de l'invention, le plancher à crépines 6, dans lequel s'effectue le passage de l'eau ascendante à traiter et qui sert de moyen de retenue du lit 5 de matériau granuleux, comporte une série d'injecteurs 7a, 7b, 7c... etc, comme indiqué sur les figures 2 et 3, dont chacun, comme par exemple 7a sur la figure 3, fixé sur la planche 6 par des moyens appropriés 8, est constitué par deux plaques perforées 9 et 10 dont une face comporte une structure à dents triangulaires 11 et qui sont disposées tête-bèche, l'ensemble constituant une double grille résistant à l'abrasion et empêchant les dépôts de carbonate de calcium.

Selon une autre caractèristique essentielle du réacteur, ce dernier est garni dans sa partie supérieure de plaques lamellaires 12, 13, 14.. inclinées entre 55 et 65 degrés et généralement à 60 degrés environ,.. espacées entre elles de cinq à cinquante centimètres qui permettent de limiter l'expansion du lit en jouant le rôle de décanteur arrêtant et concentrant le matériau granuleux.

Le réacteur 1 est en outre muni, au niveau de la partie inférieure du lit 5, d'un système 15 - explicité plus loin - servant à l'extraction séquentielle des billes de matériau granuleux chargé en $CaCO_3$ , avec synchronisation d'une injection d'eau pressurisée.

Le fonctionnement du réacteur tel qu'illustré schématiquement sur la figure 1 peut être décrit comme suit : l'eau brute à traiter est envoyée par la canalisation 16 dans le faux fond 17 du réacteur et débouche dans le réacteur avec répartition à grande vitesse (jusqu'à 2 à 3000 m/h ou plus) par les injecteurs plats du plancher 6. L'agent alcalin est introduit au droit d'éjecteurs 18 disposés avantageusement juste au-dessus du plancher 6, par exemple à une distance de un à dix centimètres. Dès son mélange avec l'eau, l'agent alcalin est rapidement dilué et le flux permet d'expanser et de maintenir à l'état fluidisé les grains du lit 5. La réaction chimique avec précipitation de carbonate de calcium se produit immédiatement et les grains en turbulence se recouvrent de carbonate et grossissent. L'eau traitée passe ensuite dans le dispositif 1b à lamelles inclinées et sort, décarbonatée partiellement ou totalement, par la surverse 19. On peut, si nécessaire, réduire partiellement les teneurs en sulfate de calcium et de magnésium (dureté de l'eau dite "permanente") en ajoutant à l'agent alcalin de base (chaux ou hydroxyde de sodium) du carbonate de sodium, le mélange d'agent alcalin et de carbonate de sodium pouvant également se faire hors du réacteur.

Lorsque les billes du lit 5, recouvertes de Ca $CO_3$ deviennent trop volumineuses, elles sont extraites par le système 15. Pour cela on ouvre les vannes 15a et 15b pendant quelques dizaines de secondes pour évacuer des billes du lit fluidisé 5 puis on ouvre la vanne 15c par laquelle on introduit sous pression de l'eau traitée pendant quelques secondes. Cette eau repousse vers le réacteur 1a brièvement les grains se trouvant dans la branche 15, ce qui permet la manoeuvre de fermeture des vannes 15b et 15a en l'absence de matériau granuleux. On évite ainsi l'effet d'abrasion de ce matériau sur les moyens de fermeture des vannes et augmente la durée de vie de ces dernières.

L'extraction des grains devenus trop gros peut être effectuée séquentiellement ou en continu, à faible débit sur de gros réacteurs. L'automaticité peut être programmée par une simple horloge. Si les variations de qualité de l'eau sont trop importantes, l'extraction des gros grains et le rechargement de matériau neuf peuvent être commandés par une sonde disposée en partie haute du réacteur. Dans ce cas, il est avantageux que l'injection de l'agent (ou réactif) alcalin soit asservie à un paramètre lié à la minéralisation de l'eau, tel que résistivité, TH calcique, TH total (calcium et Magnésium) ou encore TAC (titre alcalimétrique total).

Grâce à la présence des lamelles inclinées dans la partie haute 1b du réacteur, le lit fluidisé 5 se concentre et reste dans la partie la et l'on peut ainsi travailler avec des réacteurs de quelques mètres seulement de hauteur.

On donnera ci-dessous les résultats obtenus par traitement d'eau à adoucir dans un réacteur circulaire d'environ trois mètres de hauteur au total, dont 1,80 m pour la partie inclinée 1b, de section: 0,5 $m^2$ avec une hauteur de lit, en statique, d'environ 0,60 mètres. et de grains de diamètre moyen 0,6 mm. L'expansion des grains, en fluidisation, s'effectuait sur une hauteur d'environ 1,20 à 1,30 mètres. L'eau à traiter était introduite à une vitesse de 140 m/h par la canalisation 16 et l'on trouvera dans le tableau 1 ci-dessous les résultats des analyses effectuées sur des prélèvements à différents niveaux du réacteur, à savoir (voir figure 1) en 4a, en 4c et à la sortie:surverse 19:

Tableau 1

| Paramètres mesurés | Eau à traiter (en 16) | Position 4a | Position 4c | sortie (en 19) |
|---|---|---|---|---|
| pH | 7,7 | 8,3 | 8,1 | 8,1 |
| Turbidité NTU | 0,2 | 0,4 | 0,25 | 0,3 |
| TAC | 24,6 | 19,2 | 18,4 | 18,4 |
| TH calcique | 27 | 12 | 10,5 | 10,5 |
| TH Total | 31 | 17,5 | 16 | 15 |

On notera, d'après ces résultats, que l'eau est quasiment décarbonatée au niveau même du lit fluidisé (position 4a), ceci grâce à la présence des lamelles inclinées (en position 1b) qui assurent une densification du lit fluidisé malgré la très grande vitesse de passage dans l'eau dans le réacteur. Ce dernier peut donc être prévu avec un volume beaucoup moins important que les réacteurs connus. La forte vitesse, qui assure une dispersion puis un mélange quasi-instantané du réactif alcalin avec le lit granuleux, est obtenue grâce aux injecteurs plats de l'invention.

Comme l'indique la figure 3 des dessins annexés, la base des triangles 11, dont sont munies les plaques 9, 10, est orientée vers l'extérieur de la grille.

Conformément à une variantes, la technique selon l'invention peut être appliquée également à la précipitation des métaux lourds (plomb, mercure...etc) dans les eaux industrielles ainsi qu'à celle des phosphates dans les eaux usées. Les grains recouverts de carbonate de Ca servent de support de fixation du phosphore et des métaux lourds et le procédé peut donc être orienté, si besoin est, sur l'élimination de ces éléments.

Dans le mode de réalisation non limitatif, illustré sur la figure 1, les lamelles inclinées (12...14) ont été installées sur un prolongement 1b du réacteur qui fait lui-même un angle aigu avec le corps principal 1a. Il doit être bien compris qu'en pratique, ce prolongement 1b peut être lui-même vertical c'est-à-dire en continuité avec la partie inférieure 1 a du réacteur, les lamelles (12..14) étant disposées, selon un angle de 55 à 65 degrés avec l'axe du réacteur, dans cette partie supérieure verticale 1b. Dans ce type de réalisation, la partie supérieure du réacteur peut comporter, au-dessus du système de lamelles, des moyens de filtration ascendante, par exemple sur matériaux flottants moins denses que l'eau.

En outre, un tel réacteur vertical dans sa totalité et de section cylindrique peut être associé à une enveloppe externe annulaire, concentrique au réacteur, à l'intérieur de laquelle on effectue un post-traitement de l'eau décarbonatée issue du sommet de la partie 1b du réacteur 1. Cette zone de traitement peut correspondre à une filtration, à une stérilisation ou une oxydation, catalytique ou non, (par exemple ozonation) ou encore à une dénitrification.

Enfin, d'autres variantes d'exécution peuvent être mises en oeuvre. Par exemple la diffusion de l'agent alcalin par la canalisation ou les éjecteurs 18 peut être étagée en hauteur, jusqu'à 1 mètre du plancher 6 selon plusieurs points d'éjection. En outre ces éjecteurs d'agent alcalin peuvent être disposés sur une rampe d'injection agencée de façon à ne pas projeter de produit alcalin sur la périphérie du plancher 6, ceci afin d'éviter des prises en masse sur les parois. Enfin, il convient de préciser que les séries d'injecteurs (7 à 7c) peuvent être installés sur une partie seulement ou sur la totalité du plancher 6.

## Revendications

1. Réacteur (1) pour la décarbonation de l'eau, dans lequel l'eau brute,injectée à la base, est traitée par un agent alcalin du type chaux hydratée ou hydroxyde de sodium au sein d'un matériau granuleux fin servant de germe de cristallisation pour la formation de billes de carbonate de calcium et maintenu en fluidisation dans la masse liquide, CARACTERISE en ce qu'il est muni d'une part, dans sa partie inférieure, d'une série d'injecteurs plats (7a...) constitués par deux grilles perforées (9, 10) comportant chacune une face à dents triangulaires (11) et disposées tête-bêche, par lesquelles l'eau est injectée et, d'autre part, dans sa partie supérieure, d'un prolongement (1b) muni de séries de lamelles inclinées (12...14) faisant un angle de 55 à 65 degrés avec l'axe vertical du réacteur.

2. Réacteur selon la revendication 1, caractérisé en ce que l'écartement des perforations des grilles est compris entre 0,1 et 0,6 mm.

3. Réacteur selon l'une quelconque des revendications 1 ou 2, caractérisé en ce que les séries de lamelles inclinées (12...14) qui prolongent le réacteur vertical, occupent toute la section de ce réacteur et ont un espacement entre elles de 5 à 50 centimètres

4. Réacteur selon l'une quelconque des revendications 1 à 3, caractérisé en ce qu'il est conçu pour une hauteur totale maximum de 4 mètres, la longueur de la partie en lamelles inclinées variant de 0,4 à 2 mètres, le fonctionnement se faisant à pression atmosphérique ou sous pression.

5. Réacteur selon l'une quelconque des revendications 1 à 4, caractérisé en ce que le matériau granuleux fin (5) a un diamètre moyen compris entre 0,1 et 0,6 cm et est choisi dans le groupe: sable, poudre de calcaire, brique pilée ou parmi les produits inertes plus légers dont : shistes, pierre ponce, anthracite, chamotte.

6. Réacteur selon l'une quelconque des revendications 1 à 5, caractérisé en ce qu'il est en outre muni dans sa partie inférieure ou médiane de vannes automatiques (15a, 15b) pour l'évacuation séquentielle des billes de matériau granuleux chargées en carbonate, la manoeuvre de fermeture des vannes étant synchronisée avec une injection d'eau sous pression (15c)

7. Réacteur selon l'une quelconque des revendications 1 à 6, caractérisé en ce que l'agent alcalin est choisi dans le groupe : chaux hydratée, hydroxyde de sodium, carbonate de sodium ou mélanges de ces produits.

8. Réacteur selon l'une quelconque des revendications 1 à 7 caractérisé en ce que le prolongement (1b), dans lequel sont installées les lamelles inclinées, est également vertical, l'ensemble du réacteur pouvant être muni d'une enveloppe externe concentrique où s'effectue un post-traitement de l'eau décarbonatée.

9. Réacteur selon l'une quelconque des revendications 1 à 8, caractérisé en ce que le moyen d'introduction de l'agent alcalin est situé au-dessus du plancher à crépins (6) muni des injecteurs plats (7a à 7c), en un point (18) ou une série de points étagés disposés à une distance de 1 à 100 cm au-dessus dudit plancher (6)

10. Utilisation du réacteur selon l'une quelconque des revendications 1 à 9 dans le processus de décarbonatation appliqué à la précipitation, sur ledit matériau granuleux, des métaux lourds dans le cas des eaux industrielles et à l'élimination des phosphates dans les eaux usées.

## Claims

1. Reactor (1) for decarbonization of water, in which the crude water, injected at the base, is treated with an alkaline agent of hydrated lime or sodium hydroxide type within a fine granular material serving as a crystallization germ for the formation of calcium carbonate balls and kept in a state of fluidization in the liquid mass,
characterized by the fact that it is equipped on the one hand, in its lower.part, with a series of flat injectors (7a....) each consisting of two perforated grids (9,10) each having a face with triangular teeth (11) positioned "head to tail", through which the water is injected, and on the other hand, in its upper part, with a prolongation (1b) equipped with a series of inclined strips (12..14) forming an angle of 55-65° in relation to the vertical axis of the reactor.

2. Reactor in accordance with Claim 1, characterized by the fact that the distance between the perforations in the grids ranges from 0.1 to 0.6mm.

3. Reactor in accordance with either of Claims 1 and 2, characterised by the fact that the series of inclined strips (12...14) forming the prolongation of the vertical reactor occupy the entire cross section of the said reactor and are spaced apart at a distance of between 5 and 50 cms.

4. Reactor in accordance with any one of Claims 1 to 3, characterized by the fact that it is designed for a maximum total height of 4 metres, while the length of the part consisting of inclined strips varies from 0,4 to 2 metres, the system operating at atmospheric pressure or below.

5. Reactor in accordance with any one of Claims 1 to 4, characterized by the fact that the fine granular material (5) has an average diameter of between 0.1 and 0.6 cm and is selected from the group: sand, limestone powder, pounded brick, or from among the tighter products, such as schiste, pumice stone, anthracite, chamotte.

6. Reactor in accordance with any one of Claims 1 to 5, characterized by the fact that it is also equipped in its lower or medium part with automatic valves (15a, 15b) for the successive discharge of balls of granular material charged with carbonate, the valve closure operation being synchronized with an injection of water under pressure (15c).

7. Reactor in accordance with any one of Claims 1 to 6, characterized by the fact that the alkaline agent is selected from the group: hydrated lime, sodium hydroxide, sodium carbonate or mixtures of these products.

8. Reactor in accordance with any one of Claims 1 to 7, characterized by the fact that the prolongation (1b) in which the inclined strips are installed is likewise vertical, while the reactor as a whole may be equipped with an eccentric outer casing where the decarbonated water undergoes an after-treatment.

9. Reactor in accordance with any one of Claims 1 to 8, characterized by the fact that the means for introducing the alkaline agent is situated above the strainer floor (6) equipped with flat injectors (7a to 7c) at a point (18) or a series of staged points situated at a distance of between 1 and 100 cm above the said floor (6).

10. Use of the reactor according to any one of Claims 1 to 9 in the decarbonization process applied to the precipitation, on the said granular material, of heavy metals, in the case of industrial water, and to the elimination of the phosphates in the spent water.

## Patentansprüche

1. Reaktor zur Enthärtung von Wasser, bei welchem Rohwasser, das der Basis eingespritzt wird, durch ein alkalisches Mittel vom Typ hydrierter Kalk oder Natriumhydroxid im Inneren eines feinkörnigen Materials behandelt wird, das als Kristallisationskeim für die Bildung von Kalziumkarbonatkugeln dient und im fließfähigen Zustand in der flüssigen Masse gehalten wird, **dadurch gekennzeichnet,** daß er einerseits in seinem unteren Teil mit einer Reihe von Einspritzböden (7a...), durch welche das Wasser eingespritzt wird, die durch zwei gelochte Gitter (9,10) gebildet sind , von denen jedes eine Außenseite mit dreieckigen Zähnen (11) aufweist und die mit ihren Spitzen gegeneinander gerichtet angeordnet sind und andererseits in seinem oberen Tell, einer Verlängerung (1b), mit Reihen-von geneigten Lamellen (12...) versehen ist, die einen Winkel von 55 bis 65° mit der Vertialen des Reaktors bilden .

2. Reaktor nach Anspruch 1, **dadurch gekennzeichnet,** daß der Abstand der Lochungen des Gitters zwischen 0,1 und 0,5 mm beträgt.

3. Reaktor nach einem der Ansprüche 1 oder 2, **dadurch gekennzeichnet,** daß die geneigten Lamellenreihen (12..), die den Reaktor vertikal verlängern, den gesamten querschnitt des Reaktors ausfullen und einen Abstand untereinander von 5 bis 50 cm aufweisen.

4. Reaktor nach einem der Ansprüche 1 bis 3, **dadurch gekennzeichnet,** daß er für eine Gesamthöhe von maximal 4 m entworfen ist, wobei die länge des Teiles mit den geneigten Lamellen zwischen 0,4 und 2 m variiert und wobei die Arbeitsweise bei Atmosphärendruck oder unter Druck erfolgt.

5. Reaktor nach einem der Ansprüche 1 bis 4, **dadurch gekennzeichnet,** daß das feinkörnige Material (5) einen mittleren Durchmesser zwischen 0,1 und 0,6 cm aufweist und aus der Gruppe: Sand, Kalksteinpulver, Ziegelmehl oder unter leichteren inerten Produkten, wie Schiefer, Bimsstein, Anthrazit, Schamotte ausgewählt ist.

6. Reaktor nach einem der Ansprüche 1 bis 5, **dadurch gekennzeichnet,** daß er außerdem in seinem unteren oder mittleren Teil mit automatischen Ventilen (15a,15b) für die sequentielle Entleerung der mit Karbonat beladenen Granulatkugeln versehen ist, wobei der Vorgang des Schließens der Ventile mit der Einspritzung von Wasser unter Druck (15c) synchronisiert ist.

7. Reaktor nach einem der Ansprüche 1 bis 6, **dadurch gekennzeichnet,** daß das alkalische Mittel aus der Gruppe: hydrierter Kalk, Natriumhydroxid, Natriumkarbonat oder Mischungen dieser Produkte ausgewählt ist.

8. Reaktor nach einem der Ansprüche 1 bis 7, **dadurch gekennzeichnet,** daß die Verlängerung (1b), in welcher die geneigten Lamellen angeordnet sind, ebenfalls vertikal ist, wobei die Gesamtheit des Reaktors mit einem äußeren konzentrischen Mantel versehen sein kann, wo eine Nachbehandlung des enthärtteten Wassers stattfindet.

9. Reaktor nach einem der Ansprüche 1 bis 8, **dadurch gekennzeichnet,** daß das Mittel zur Einführung des alkalischen Mittels oberhalb des Einspritzbodens (6), der mit Einspritzplatten (7a bis 7c) versehen ist, an einem Punkt (18) oder einer stufenförmig angeordneten Reihe von Punkten angeordnet ist, die mit einem Abstand von 1 bis 100 cm oberhalb des Bodens (6) angeordnet sind.

10. Verwendung des Reaktors nach einem der Ansprüche 1 bis 9 bei dem Vorgang der Entkarbonisierung, angewendet bei der Ausscheidung, auf dem körnigen Material, von Schwermetallen, im Falle von Nutzwasser, und der Entfernung von Phosphaten im falle von Schmutzwasser.

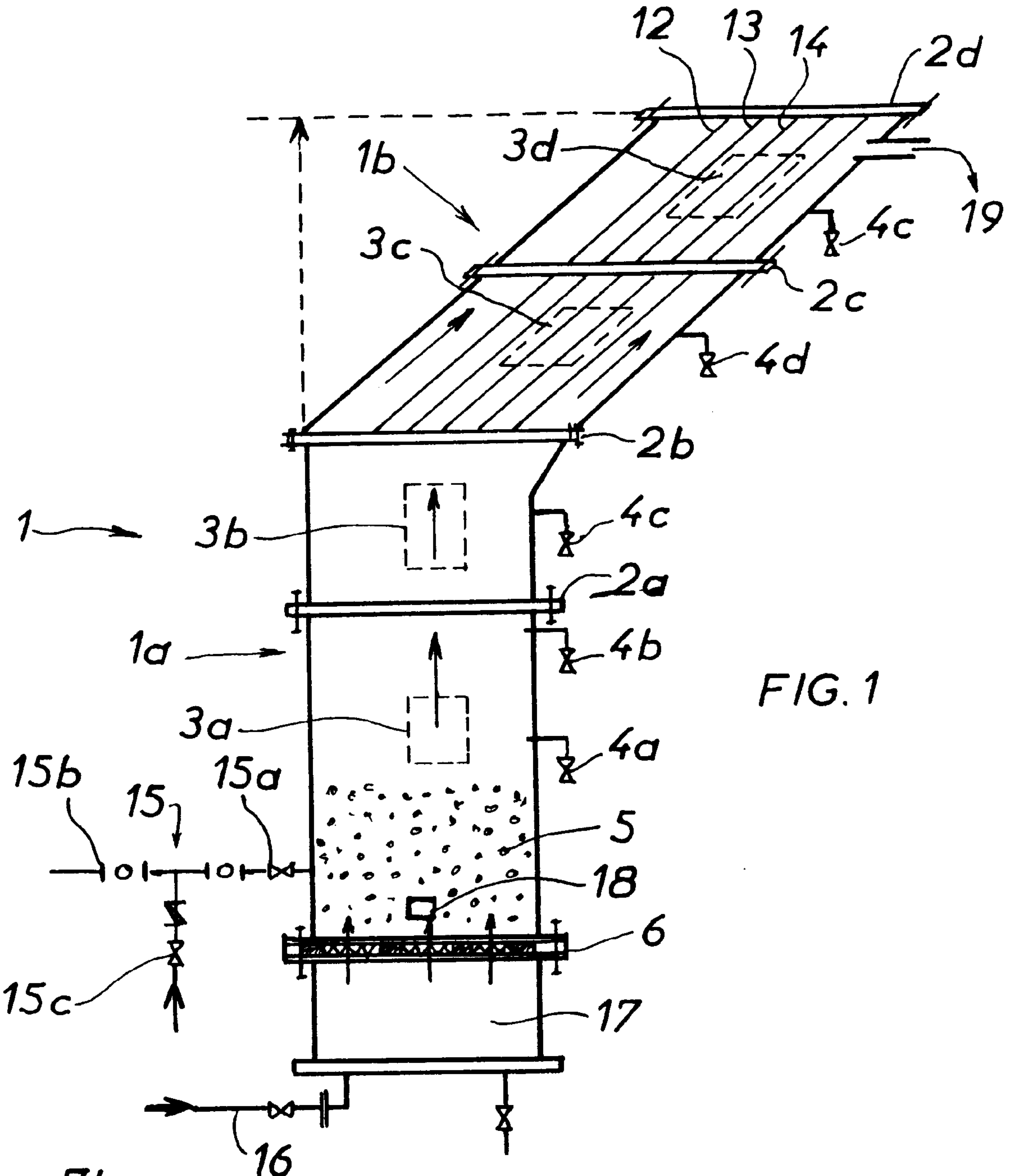


FIG. 1

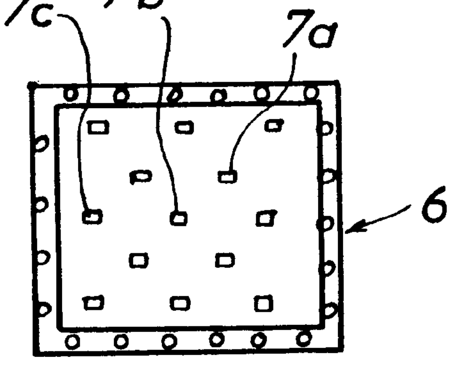


FIG. 2

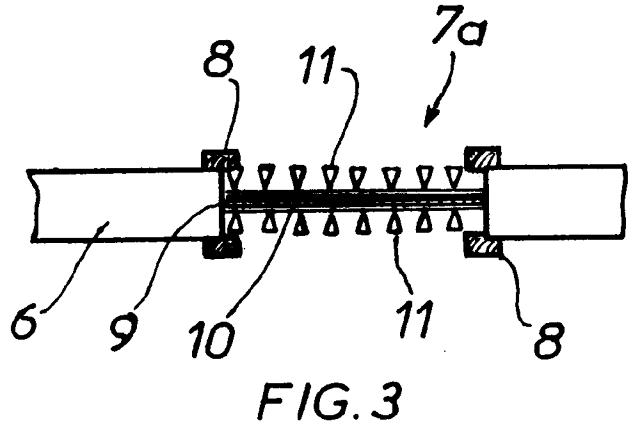


FIG. 3